# EUROPEAN PATENT SPECIFICATION

(11) **EP 1 565 626 B1**
(45) Date of publication and mention of the grant of the patent: **04.04.2007**
(21) Application number: 03789054.8
(22) Date of filing: 18.11.2003
(51) Int. Cl.: E04B 2/76, E04B 2/74, E04B 2/82

(54) **SYSTEM FOR REALIZING MOBILE DIVIDING WALLS**
VERSETZBARE TRENNWAND
SYSTEME PERMETTANT DE REALISER DES CLOISONS MOBILES

(30) Priority: 29.11.2002 IT TO20021042
(43) Date of publication of application: 24.08.2005
(73) Proprietor: Steelcase Werndl Aktiengesellschaft, 83026 Rosenheim (DE)
(72) Inventor: FRASCAROLI, Francesco, I-40133 Bologna (IT)
(74) Representative: GROSSE BOCKHORNI SCHUMACHER
(86) International application number: PCT/EP2003/012908
(87) International publication number: WO 2004/051022

(56) References cited:
- WO-A-93/04241
- DE-A- 19 948 173
- FR-A- 2 232 644
- US-A- 3 195 698
- US-A- 4 388 786
- US-A- 6 112 472
- US-A- 6 134 844

## Description

The present invention relates to a system for realizing mobile dividing walls, particularly for offices.

For the purposes of making more efficient use of working space in offices, it is common practice to divide a room into several separate areas. In some cases such a division is partial, that is, based on the use of partitions formed by modular elements placed side by side and of limited height but definitely lower than the room in question. Each modular element comprises a pair of posts with a panel extending therebetween, the modular elements being supported in an erect position by special bases or supports associated with the lower ends of the posts.

In other cases, so-called mobile walls are instead used for dividing a room completely to form working areas closed on several sides. In some solutions the mobile walls extend from the floor to the ceiling of the room to divide the latter into two distinct parts, or they are disposed to form one or more "booths" within the room to be divided. Very often the mobile walls must be reconfigured or moved in accordance with changing requirements.

At present, dividing walls of the stated type are generally constituted by a metal section supporting structure covered on both sides by modular paneling in a vertical or horizontal web.

The section structure is normally fixed on the perimeter to the building by plugs, thereby making assembly and reconfiguration operations fairly complex and also causing alterations on the building (such as holes on the walls) that become visible when the mobile wall is moved or reconfigured.

Prior art document US 3,195,698 A describes a system of the above-mentioned type, in which individual components of the wall have overall rectangular shapes and cross sections and are assembled at right angles with respect to each other. In use, such a system is only of limited flexibility.

Prior art document US 4,388,786 A discloses a system of the above-identified type in which one of the components has a (partly) circular cross section defining a convex outer surface for connection with components of overall rectangular shapes and cross sections, thus entailing the existence of joints which are easily accessible from the outside and therefore prone to blocking and deterioration by the intrusion of various objects, pollutants etc. while presenting a danger of injury.

Prior art document WO 93/04241 A discloses a rod with securing device for erecting temporary buildings, e.g. display panels or the like. Said rod is connected with a vertical column of circular cross section and with smooth outer surface by means of screws which are aligned with the rod axis and which are introduced into threaded bores located in the wall of the vertical column. In this context, a longitudinal end of the rod has a concave shape which mates with a portion of the smooth outer surface of the vertical column.

Prior art document DE 199 48 173 A1 discloses a device for fixing a crossbar of a mobile wall system to a main post of said mobile wall system. To this end, the crossbar is equipped with an end piece comprising holding fingers of overall concave shape which is in positive fit (or form fit) with a smooth outer surface of the main post.

The present invention is based on the object of specifying a system for realizing mobile dividing walls of novel design that permit a room to be divided with great flexibility of configuration and heights without using bonds with the building in simple, rapid and economic fashion.

Furthermore, it is the object of the present invention to provide a system of the above-mentioned type which achieves an enhanced flexibility in use in conjunction with an increased durability and reliability while obviating the above-mentioned disadvantages of prior art systems.

These and other objects, which will become more clear hereinafter, are attained according to the present invention by a system for realizing mobile dividing walls having the features of the attached claims, which are intended to be an integral part of the present description.

Further objects, features and advantages of the present invention will become clear from the detailed description that follows and from the attached drawings, provided strictly by way of explanatory example and not restrictively, in which:
Figure 1 shows a perspective view of some basic components of a wall realized according to the invention;
Figure 2 shows a partial perspective view of a main post of a wall realized according to the invention, equipped with a corresponding locking device;
Figure 3 shows a partial and schematic section of a system for coupling an intermediate crossbar to a corresponding main post (left part), and a main crossbar to an intermediate post (right part), of a wall realized according to the invention;
Figure 4 shows an exploded view of the locking device as in Figure 2;
Figure 5 shows a partial and schematic cross section of a first wall realized in accordance with the invention;
Figure 6 shows a partial and schematic cross section of a second wall realized in accordance with the invention;
Figure 7 shows a perspective view of a rapid coupling device belonging to the system of Figure 3;
Figure 8 shows an exploded view of the rapid coupling device of Figure 7;
Figure 9 shows a partial and schematic section of a main crossbar of a wall according to the invention, equipped with two coupling devices as in Figures 7 and 8;
Figure 10 shows a section according to line X - X in Figure 2;
Figure 11 shows a first schematic sectional view of a wall realized according to the invention, equipped with a first regulation arrangement at the bottom of an intermediate post;
Figure 12 shows a second schematic sectional view of a wall realized according to the invention, equipped with the arrangement of Figure 11;
Figure 13 shows a first schematic sectional view of a wall realized according to the invention, equipped with a first regulation arrangement for a holding section;
Figure 14 shows a second schematic sectional view of a wall realized according to the invention, equipped with a second regulation arrangement for a holding section;
Figure 15 shows an example of a partition system formed by walls realized according to the invention;
Figures 16 and 17 show schematic sections of two possible forms of main posts to be used for the purposes of realizing the wall according to the invention.

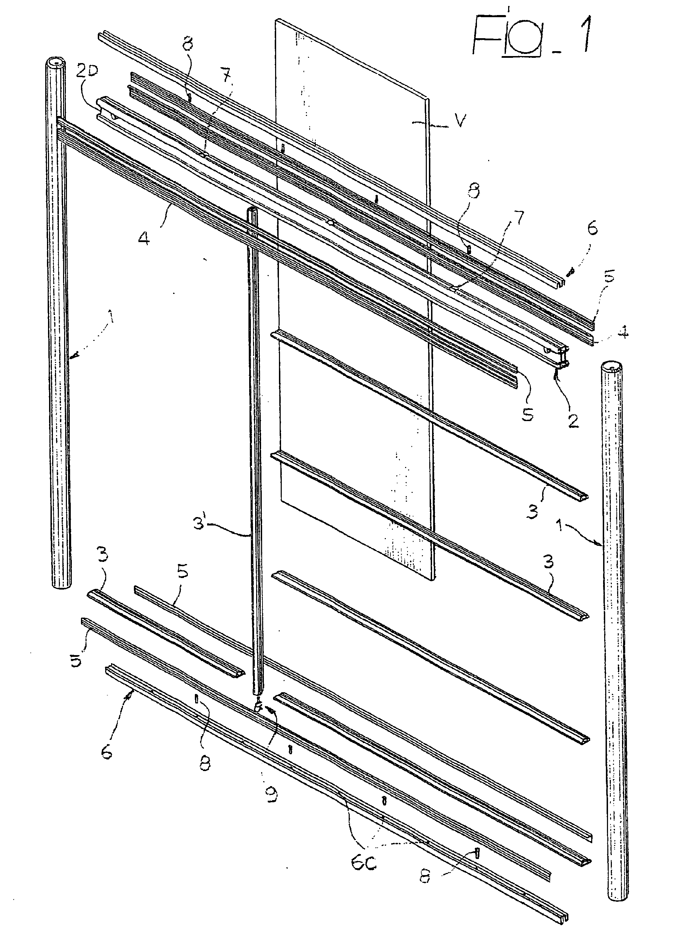

Figure 1 illustrates the basic components of a removable dividing wall realized according to the invention. In said Figure, no. 1 indicates two main posts between which a main connecting crossbar having structural functions is to be fixed, indicated as a whole by 2. According to an important aspect of the invention, the connection between posts 1 and crossbar 2 realizes the supporting structure of an entire mobile wall according to the invention, whereby the span delimited by said structure can be further divided by intermediate posts and crossbars, in a horizontal or vertical web, to allow subsequent filling or closure thereof.

No. 3 indicates some intermediate crossbars, and no. 3' an intermediate post. It should be noted that components 3 and 3' are realized by an identical basic section, described below; the differences between said components 3 and 3' therefore relate solely to their length and arrangement within the mobile wall. The letter V indicates a generic filling element for the wall, which is assumed to be a pane of glass here, intended to be mounted within the span formed by main posts 1 and main crossbar 2.

No. 4 indicates closing sections of a first type provided for cooperating with main crossbar 2; no. 5 indicates closing sections of a second type provided for cooperating with corresponding holding section 6, the latter being used if necessary to complete the mobile wall at the top or bottom, as to be described below. No. 7 schematically indicates elastic elements used to ensure the fixing of second closing sections 5 between main crossbar 2 and corresponding holding section 6. No. 8 indicates adjustable pressers used to ensure the linearity and maintenance of the correct operative position of holding sections 6. No. 9 indicates a regulation unit for intermediate post 3'.

The components indicated by 1, 2, 3, 3', 4 and 5 are preferably made of aluminum or aluminum alloy, with surface treatment of the corresponding parts intended to remain in view. The other components, and particularly holding sections 6, can be made of steel.

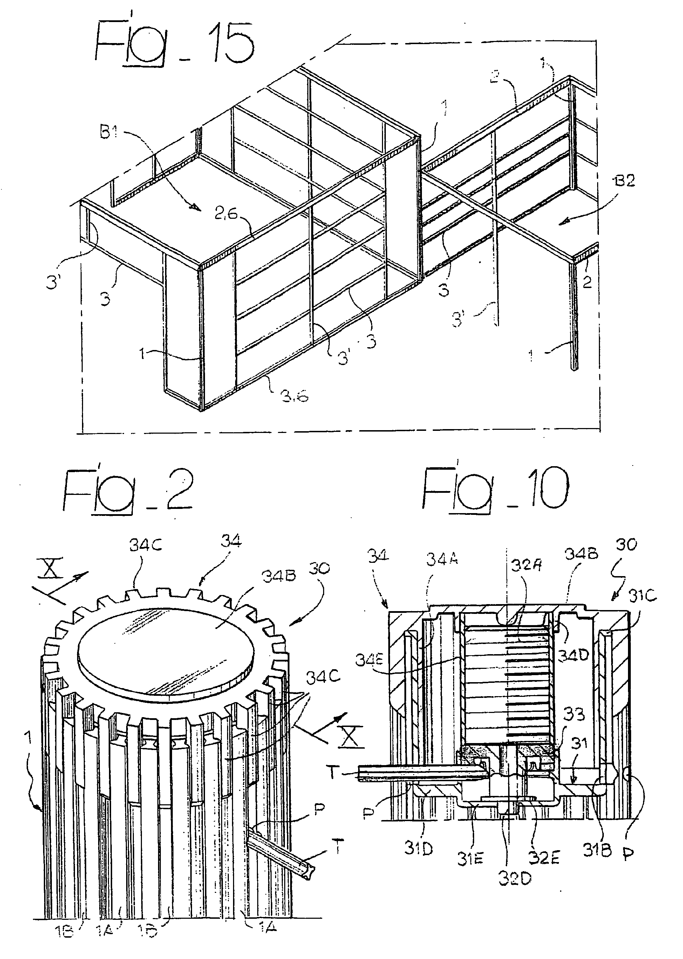

Main posts 1 have an altogether circular, internally hollow section. As can be seen for example in Figures 2-4, the outer surface of posts 1 comprises a plurality of identical radial ribs 1A with varying section extending longitudinally over the entire length of post 1, whereby groove 1B with varying section is formed between two adjacent ribs; the center distance between two adjacent grooves 1B is preferably 15°.

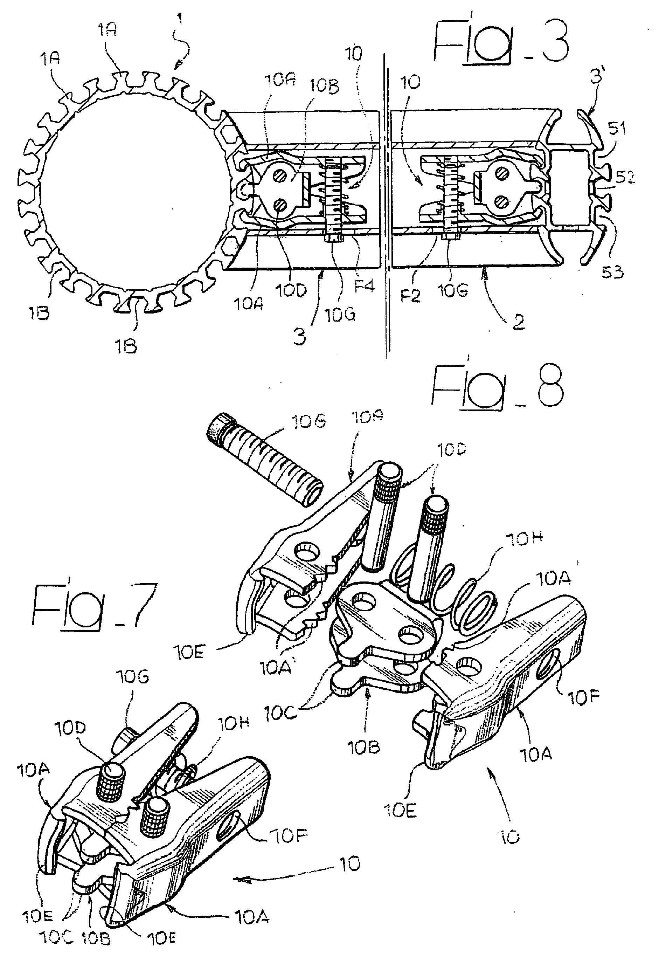

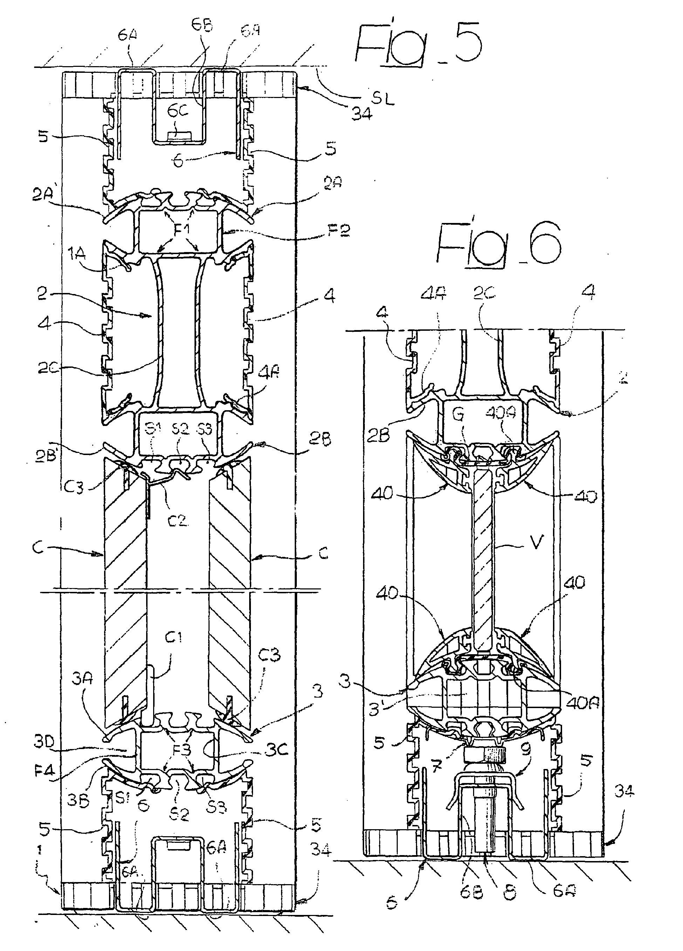

As can be seen for example in Figures 5 and 6, intermediate crossbars 3, like intermediate posts 3', have an outer form with predominantly elliptic section formed by two opposing curved surfaces, indicated by 3A and 3B in Figure 5, between which substantially rectangular hollow core 3C is formed. As can be seen, the side edges of surface 3A end at a certain distance with respect to the side edges of surface 3B so as to define, together with core 3C, two side channels 3D. On each curved surface 3A and 3B three respective longitudinal grooves are centrally defined, indicated by S1, S2 and S3. The two longitudinal ends of intermediate crossbar 3 are curved inwardly to define a concave profile adapted to mate with the outer curvature of the surface of main posts 1, as can be seen for example in the left part of Figure 3.

Main crossbar 2 has a substantially double T section formed by a hollow upper portion, a hollow lower portion and a hollow intermediate portion indicated in Figure 5 by 2A, 2B and 2C, respectively. As can be seen, portions 2A and 2B are identical and disposed in mirror-inverted fashion with respect to portion 2C, the section of portions 2A and 2B being similar to that of intermediate crossbars 3. Surface 2A', 2B' of each portion 2A, 2B opposite that joining with intermediate portion 2C is therefore altogether curved and has defined centrally therein three longitudinal grooves side by side, indicated by S1, S2 and S3 in Figure 5, being of identical form to those present on curved surfaces 3A and 3B of intermediate crossbars 3. The two longitudinal ends of main crossbar 2 are also not flat but curved inwardly to define a concave profile adapted to mate with the altogether circular outer surface of main posts 1.

In accordance with a second aspect of the present invention, the connection between main crossbar 2 and posts 1 is realized by rapid coupling means; preferably, moreover, the fixing of ends of intermediate crossbars 3 and at least one end of intermediate posts 3' is realized by rapid coupling means analogous to those used for connecting main crossbar 2 and posts 1. In the preferred embodiment of the invention, said rapid coupling means are practically hidden from view, being contained almost completely within the overall dimensions of corresponding crossbars or posts 2, 3, 3'.

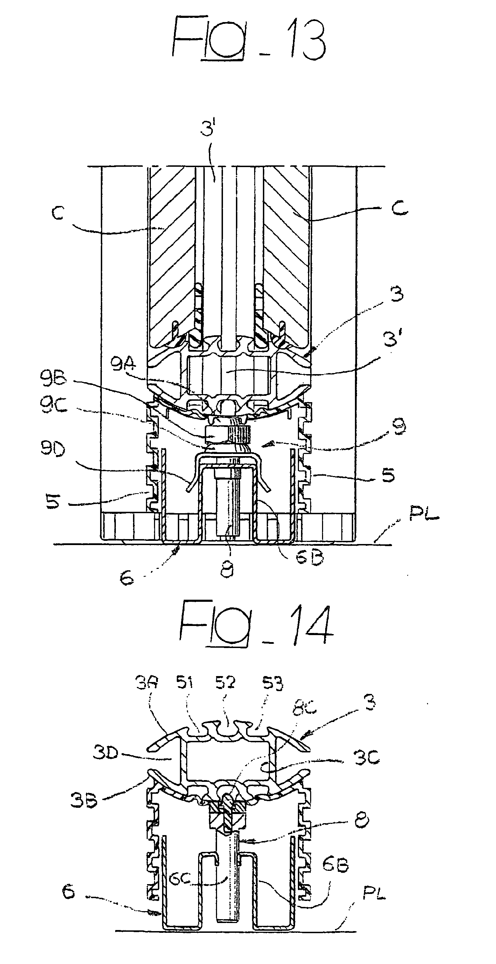

To this end, with reference to Figures 3, 7 and 8, no. 10 indicates a clamp capable of being inserted both in the longitudinal cavity of upper and lower portions 2A and 2B of main crossbar 2, and within core 3C of intermediate crossbar or post 3, 3'. Clamp 10 comprises two metal jaws 10A with a lever of the first order and metal intermediate support 10B that defines at the front two mutually parallel protruding teeth 10C. Jaws 10A are hinged to support 10B by two at least partly knurled metal pins, indicated by 10D, inserted in corresponding pairs of holes defined on the jaws and the support. On the opposing edges of jaws 10A corresponding toothings 10A' are defined that are mutually engaged after assemblage of clamp 10; the clamping ends of jaws 10A are shaped to form corresponding teeth 10E.

As can be seen in the left part of Figure 3, teeth 10E are adapted to be inserted in two grooves 1B of main post 1 and close on two corresponding ribs 1A thereof, while the two teeth 10C of intermediate support 10B are inserted at the same time in identical groove 1B of post 1 that is located between the two grooves in which teeth 10E are inserted. The right part of Figure 3, however, indicates how teeth 10E are also adapted to be inserted in grooves S and S3 of post 3' (or crossbar 2, 3) and close on two corresponding ribs thereof, while the two teeth 10C of intermediate support 10B can be inserted at the same time in groove S2 of said post.

The ends of jaws 10A opposite teeth 10E have corresponding holes, one of which (not visible in the Figures) is threaded and the other, indicated by 10F in Figure 8, is equipped with retaining means for the end of a closing screw of clamp 10, indicated by 10G, on which spring 10H is fitted in use. Screw 10G is capable of being screwed in said threaded hole, while the retaining means associated with hole 10F guides the tip of said screw during the angular movement of jaws 10A. Spring 10H tends to move apart jaws 10A in the part where screw 10G is present. Screwing of screw 10G causes jaws 10A to move angularly around corresponding pins 10D, the precision and regularity of said movement being ensured by mutually engaged toothings 10A'. Said angular movement causes the two clamping ends of jaws 10A to be drawn together so that teeth 10E catch on the corresponding longitudinal ribs of post 1, 3' or crossbar 2, 3. Thus, as a function of the amount of screwing exerted on screw 10G it is possible to reliably lock the corresponding profile housing clamp 10.

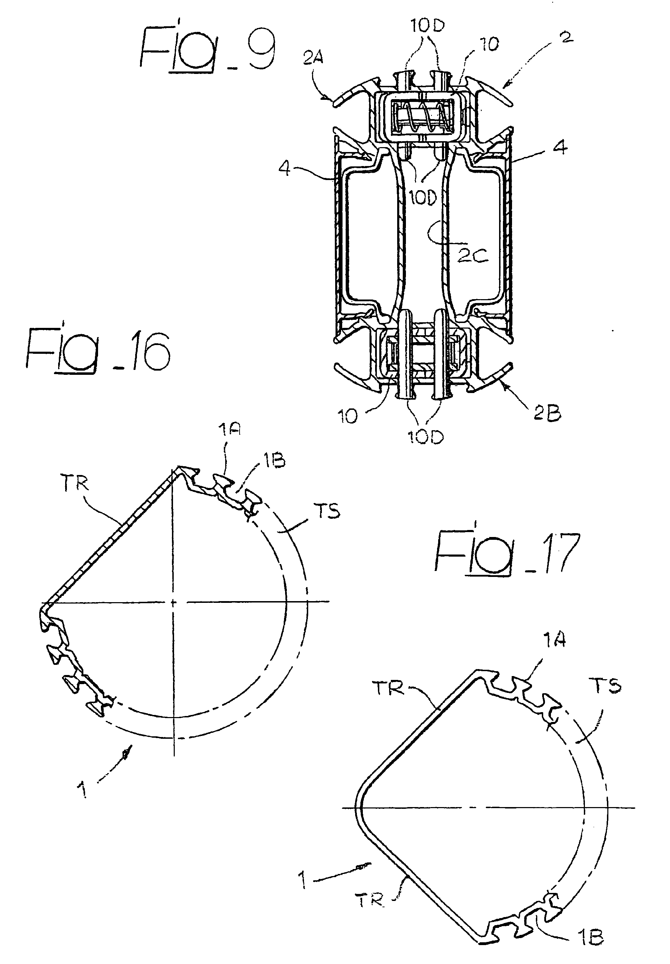

Clamps 10 are held in the fitting position by knurled pins 10D, as indicated in Figure 9. For the purposes of assemblage, clamps 10 are pre-assembled with pins 10D temporarily replaced by plastic pins, not shown in the Figures, which remain within the overall dimensions of said clamps. Subsequently each clamp 10 is inserted in the cavity of corresponding portion 2A, 2B of main crossbar 2, or central core 3C of profiles 3 or 3'. Clamp 10 is then pressed into the cavity until the holes housing said plastic pins come in register with two pairs of aligned holes (provided in the positions indicated by F1 in Figure 5) defined at given points of the end area of main crossbar 2 and provided for insertion of said pins 10D. Hole F2 is also provided in at least one side surface of portions 2A and 2B of main crossbar 2 (Figures 3 and 5) to permit screw 10G to be operated by a suitable tool, such as a screwdriver. Holes having analogous functions are of course also provided in profiles 3 or 3', in the positions indicated by F3 and F4 in Figures 3 and 5. At this point, metal pins 10D are forced within holes F1 or F3 so as to replace said plastic pins. After insertion of pins 10D, the plastic pins come out of clamps 10, and the latter are bound to profile 2 or 3, 3' by the interference of the knurling of pins 10D with holes F1 or F3.

Given that crossbar 2 realizes with main posts 1 the supporting structure of the wall, the connection between said parts must be as firm and secure as possible. For this reason, in the preferred embodiment of the invention clamps 10 are inserted at the two ends of the longitudinal cavities of both portions 2A and 2B of main crossbar 2, as can be seen in Figure 9. In other words, therefore, the fixing of main crossbar 2 between two main posts 1 provides for the use of four clamps 10, two at each end of crossbar 2. The fixing of secondary crossbar 3 not only to main post 2 but also to secondary post 3' or main crossbar 2 can instead be realized by single clamp 10 inserted in central core 3C.

It is clear from the above how the provision of coupling means realized by clamps 10 makes it possible to realize in simple and rapid fashion the mutual fixing among the various structural components of the wall according to the invention. The fact that said clamps are hidden almost completely from view, being housed inside the cavities of corresponding crossbars 2, 3 or posts 3', is particularly advantageous from an esthetic point of view.

In accordance with a third important aspect of the invention, the locking of posts 1 with respect to the room in which the dividing wall according to the invention is mounted is effected without brackets or perimeter profiles that must be fixed to the floor or ceiling of the room. To this end, Figures 2, 4 and 10 illustrate a locking device, indicated as a whole by 30, intended to be associated with at least one of the ends of each main post 1.

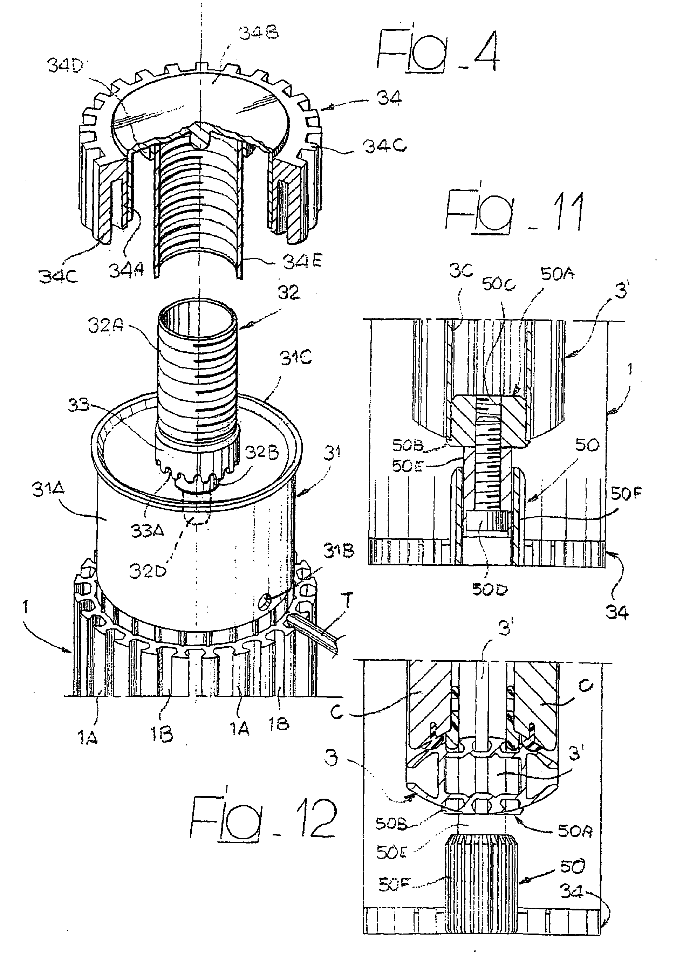

With special reference to Figures 4 and 10, device 30 comprises cup-shaped body 31 with a circular section having a diameter so as to be insertable in the inside cavity of main post 1. On cylindrical wall 31A of body 31 there are two opposing through holes 31B, whose functions will be clarified hereinafter. The upper edge of the cylindrical wall is in the form of outwardly protruding circular flange 31C having a greater outer diameter than the diameter of the cavity inside post 1. Bottom wall 31D (see Figure 10) of body 31 has in the center tubular housing 31E on the bottom of which a central seat is defined. On the side wall of housing 31E a through hole is defined that is aligned with hole 31B of cylindrical wall 31A. Turning to Figure 4, no. 32 indicates as a whole a die-cast metal pin. Upper portion 32A of pin 32 is threaded, while lower portion 32B defines end projection 32D adapted to be inserted freely in said central seat present on the bottom of tubular housing 31E (see Figure 10). As can be seen in Figure 4, portion 32A has at the bottom cylindrical segment 33 whose lower edge defines conic toothing 33A.

Locking device 30 further comprises sliding resistance element 34, for example made of plastic. Element 34 has a substantially cup-shaped core having cylindrical wall 34A and bottom wall 34B. Ribs 34C issue from the upper edge of cylindrical wall 34A, initially extending horizontally, toward the outside of wall 34A, and then continuing vertically downward. In this way, ribs 34C define on the outer part of element 34 a series of radial engagements capable of being inserted in grooves 1B of main post 1, as can be seen for example in Figure 2. The number of ribs 34C is preferably equal to that of grooves 1B, although this is not strictly essential. In bottom wall 34B of element 34 there is finally defined, in the center, engagement seat 34D for an internally threaded stem, indicated by 34E, the latter being bound to the former without a possibility of rotation.

Threaded portion 32A of pin 32 is screwed into stem 34E of element 34. The unit formed by element 34 and pin 32 is then inserted in cup-shaped body 31 such that lower projection 32D of pin 32 is inserted, with washer 32E therebetween (Figure 10), in a central hole present within housing 31E. Projection 32D is then fixed and therefore connected to body 31.

Device 30 thus formed is then fitted on the upper end of post 1 such that flanged edge 31C of cup-shaped body 31 rests on the end of said post (see Figure 10), with one of holes 31B of cylindrical wall 31A of body 31 aligned with passage P (Figures 2 and 10) previously defined on post 1. Said passage P is capable of having inserted therein a tool whose active part has a rod form with a cross-shaped section indicated by T. The tool is inserted in passage P such that its part T penetrates within housing 31E, through the side hole thereof and hole 31B of cup-shaped body 31. The cross-shaped section of portion T of the tool is capable of cooperating with lower conic toothing 33B of cylindrical segment 33; in this way the rotation of the tool produces the rotation of pin 32. Body 34 is obviously unable to move angularly because of the insertion of ribs 34C in grooves 1B. In this way the rotation of pin 32 causes the screwing or unscrewing of its threaded portion 32A with respect to stem 34E, with consequent downward or upward sliding of element 34. In this way, element 34 can be made to press on the ceiling of the room in which the wall according to the invention is to be mounted; it should be noted that device 30 can advantageously also be inserted at the lower end of post 1.

It is clear how acting on device or devices 30 makes it possible to lock two posts 1 of the supporting structure of the wall between the floor and ceiling of the room by resistance or interference without the necessity of masonry and brackets or profiles fixed to the ceiling and floor, as is the case according to the prior art. It must moreover be underlined how device or devices 30 are also hidden from view for the most part, since their main part is housed inside the cavities of corresponding main posts 1, with obvious advantages from an esthetic point of view.

Figures 5 and 6 schematically illustrate some examples of composition of walls according to the invention by corresponding intermediate sections; it should be noted that in said sections some components of the wall have been omitted for greater clarity. In Figure 5 one can see particularly main crossbar 2 and intermediate crossbar 3, which are for example fixed between two posts 1 in the ways described above, that is, by clamps 10 (not visible). In the exemplified case, the wall comprises two opposing closing or filling panels, indicated by C, fixed between main crossbar 2 and intermediate crossbar 3. As indicated for left panel C, the latter has firmly connected thereto engagement bracket C1 capable of being inserted in groove S 1 or S3 of curved upper surface 3A of intermediate crossbar 3. The opposite side of the panel has instead fixed thereto coupling element C2 having a portion adapted to mate elastically with groove S3 defined on surface 2B' of main crossbar 2. Panels C preferably also have perimeter holding means, indicated by C3. Figure 5 also shows a possible embodiment of first profiles 4 of Figure 1 used for lateral closure of intermediate portion 2C of main crossbar 2. As can be seen, profiles 4 have a Greek key section and are equipped with back fins 4A adapted to engage elastically with corresponding projections defined on the outer surfaces of portions 2A and 2B where portion 2C originates. It should be noted that in the space available between portion 2C of crossbar 2 and corresponding closing profiles 4, cables for supplying power or transmitting electric signals can possibly be passed. Such cables can advantageously further be passed inside the cavity of said portion 2C, which is if necessary equipped with special passage holes in corresponding end portions (one of said holes being indicated by 2D in Figure 1). An alternative embodiment of profiles 4 is visible in Figure 9. Figure 5 also shows two closing sections 6, an upper and a lower one, as well as corresponding second closing elements 5, which have an altogether L-shaped Greek key section. It should be noted that sections 6 have at the two longitudinal ends corresponding prolongations intended to be positioned between resistance element 34 of device 30 placed at the end of main post 1 and the floor or ceiling, according to circumstances. Said prolongations, indicated schematically by 6A in Figures 5 and 6, have the function of keeping corresponding sections 6 in position and particularly supporting upper section 6 at its two longitudinal ends.

Figure 6 partly shows a further example of wall composition in which pane of glass V is present instead of panels C. Glass V is kept in position by special locking profiles 40 which comprise corresponding projections 40A adapted to be inserted in grooves S1, S3 of surface 2B' of crossbar 2 and curved surface 3A of intermediate crossbar 3. As can be seen in Figure 6, two pairs of locking profiles 40 are provided for the purpose, being fixed to corresponding crossbars 2, 3 with glass V therebetween. The locking system of glass V can expediently provide for an elastic holding gasket, indicated by G, also effective to allow coupling of projections 40A in the corresponding grooves. Figure 6 also shows at 7 one of the elastic elements, in the form of a leaf spring, used to ensure the fixing of second closing sections 5. Elastic element 7 has a central portion adapted to mate springily with groove S2 of one of curved surfaces 3A, 3B of intermediate crossbar 3.

It must be underlined that the wall according to the invention can be completely closed upward and downward, that is, in correspondence with ceiling and floor of the room, by section 6 and corresponding closing sections 5, or have open spaces in said areas, in which case sections 6 are not used.

In the latter application, the transverse component at the upper end of the wall will be constituted by main crossbar 2, while the transverse component at the lower end of the wall will be constituted by crossbar 3. In the case where the wall is also equipped with one or more intermediate posts 3', these will be fixed to surface 2B' of main crossbar 2 by clamp 10. Said intermediate post 3' will instead have a corresponding regulation foot at the lower end, shown in Figures 11 and 12. The regulation foot, indicated as a whole by 50, comprises insert 50A inserted in the cavity inside core 3C of post 3' until its corresponding stops 50B come in contact with the longitudinal end of said core. In the center of insert 50A threaded hole 50C is defined in which fixing screw 50D of cylindrical element 50E is tightened. Element 50E is externally threaded and in turn screwed into a female thread defined on the inside surface of support bush 50F on the floor. As will be appreciated, rotating bush 50F with respect to element 50E makes it possible to vary the relative distance between the lower end of said bush and insert 50A which is bound in its own operative position. In this way it is possible to lock intermediate post 3' between main crossbar 2 and the floor of the room by resistance or interference.

Figures 13 and 14 show the case in which the mobile wall is equipped with holding section 6.

Figure 13 shows a regulation unit, already indicated by 9 in Figure 1, used for locking intermediate post 3' at the bottom in the case where lower holding section 6 is provided. It should be noted that the upper end of said post 3' will be fixed to surface 2B' of main crossbar 2 by clamp 10. Unit 9 comprises an insert (not visible in Figure 13) analogous to that indicated by 50A in Figure 12, inserted in the corresponding cavity inside core 3C of post 3'. The threaded hole of said insert has screwed therein threaded pin 9A equipped with hexagonal nut 9B, having screwed into its hole threaded shank 9C firmly connected with U-bolt 9D, the latter being capable of being fitted on central portion 6B of section 6. Acting on nut 9B therefore makes it possible to vary the relative position between said insert and U-bolt 9D so that the latter presses section 6 toward floor PL and post 3' toward main crossbar 2.

Figure 14 instead exemplifies the case of closure toward floor PL at the point where, in the lower part of the mobile wall, intermediate crossbar 3 is provided in the proximity of corresponding section 6. At the top of central portion 6B of section 6 a series of threaded holes 6C (also visible in Figure 1) is defined that are intended to receive corresponding adjustable pressers 8. Presser 8 have the form of hexagon head screws screwed into holes 6C, with centering projection 8C being provided at the top of said hexagon head. Pressers 8 are connected in some of holes 6C of lower section 6 such that projections 8C thereof are aligned with central groove S2 of intermediate crossbar 3. At this point, action on the hexagon heads of pressers 8 causes projections 8C to penetrate in groove S2 with a self-centering effect and such that pressers 8 altogether provide for closing section 6 to be pressed toward floor PL. The action of pressers 8 thus guarantees precise adhesion to the floor of section 6 as well as the linearity thereof. Analogous considerations hold for the case where section 6 is provided to close the mobile wall according to the invention at the top, that is, the space extending between portion 2B of main crossbar 2 and the ceiling of the room, indicated by SL in Figure 5. In this case projections 8C of pressers 8 will be inserted in central groove S2 of surface 2A' of crossbar 2, with the section and said pressers in substantially mirror-inverted configuration with respect to that shown in Figure 14.

Figures 16 and 17 schematically show the sections of two typologies of main posts 1 usable in a possible advantageous implementation of the invention. The section of post 1 as in Figure 16 comprises a circumferential arc segment, indicated by TS, and rectilinear segment TR. Said post 1 can be expediently used for example when it is intended to be leaning against a wall of the room. In such a case, segment TR will then be placed in contact with said wall. The section of post 1 as in Figure 17 is instead substantially in the form of a circular sector delimited by two substantially mutually perpendicular rectilinear lines TR and circumferential arc segment TS. Said post 1 can be expediently used for example when it is intended to be positioned in correspondence with the angle formed by two walls of the room.

As will be appreciated, the system for realizing mobile walls according to the invention allows a room to be divided with great flexibility of configuration and heights, without bonds to the building, in simple, rapid and economic fashion. Merely by way of example, Figure 15 shows to this end a possible composition of walls realized using the above-described elements, and particularly for the purposes of forming first booth B 1 that is assumed to rise in height as far as the ceiling (omitted in the drawing for reasons of clarity) of the room in question, and second booth B2 of lesser height, the two booths B1 and B2 having main post 1 in common.

Among the advantages of the invention the following must be underlined:
- the reduced number of basic components of the system, which allows simple and economic handling of the product;
- the rapidity of installation and reconfiguration of the walls by virtue of the provision of rapid coupling means 10 and resistance devices 30 between floor and ceiling; it should be noted that the provision of clamps 10 is also useful only for "tacking" the wall, that is, for realizing a provisional connection between parts, to be completed in a second phase; this is extremely advantageous for the workers composing the wall, during assemblage;
- the possibility of realizing joints between posts and crossbars at a variable angle owing to the circular section of the main posts and the ends with a corresponding concave profile of the crossbars; the provision of grooves with a center distance of 15° covering at least part of the outer surface of posts 1 is particularly advantageous from this point of view;
- the lack of bonds to the building but with secure locking of the supporting structure of the mobile wall thereto, obtained by resistance devices 30 between floor and ceiling that also permit compensation of any site tolerances; all this without a need to fix brackets or profiles to the walls of the room to be divided into areas;
- the possibility to vary at will at any time the paneling of the walls through the corresponding fixing system independent of the supporting structure formed by posts 1 and crossbar 2; in case of reconfiguration or moving of the wall, no holes will remain in view on the walls of the building;
- the paneling with fixing independent of the structure of the wall, with the possibility of varying the degree of privacy and the materials/colors of the filling elements in simple and rapid fashion;
- the possibility to realize the cable path integrated in the system, and particularly in the supporting structure, with continuous laying and inspectability independent of the paneling.

It is clear that numerous variations are possible for the expert in the field to the system described by way of example without going beyond the scope of the invention as defined by the appended claims.

It is pointed out for example that a wall realized according to the invention can have associated therewith diverse additions and accessories, such as shelves, small pieces of furniture, cupboards, lamps, etc., that will be partly realized using profiles with a section analogous to those indicated above by 2 and 3. From this point of view, the fixing of such components to the wall structure can be effected using clamps 10.

The filling of the framework formed by crossbars 3 and/or posts 3' within the self-supporting span constituted by posts 1 and crossbar 2 can be realized not only by panels or modular glass panes but also by container modules and door modules.

The section indicated above by 2 can also be used as an intermediate or auxiliary post, being fixed at both ends to corresponding crossbars 3 by pairs of clamps 10.

Main crossbar 2 could be formed by disposing two intermediate crossbars 3 parallel, thereby realizing the two upper and lower portions 2A, 2B and interconnecting them by special coupling elements of obvious realization for the technician in the field that effect the functions of connecting portion 2C.

It is finally pointed out that for mobile wall structures not requiring special structural strength, the functions of main crossbar 2 could be fulfilled by one or more intermediate crossbars 3.

## Claims

1. A system for realizing mobile dividing walls, particularly for offices, comprising posts (1,3'), crossbars (2, 3) and a self-supporting span (1, 2), particularly without fixed bond means with a corresponding room, the self-supporting span (1, 2) being formed of an upper or main crossbar (2) fixed between first and second main posts (1), the self-supporting span (1, 2) having fixed thereto one or more auxiliary posts (3') and / or crossbars (3) for supporting filling modules (C, V) for the wall, each main post (1) having an outer surface having at least one circumferential arc segment (TS) defining a plurality of radial ribs (1A), the radial ribs (1A) extending along the main post (1) to form a plurality of longitudinal grooves (1B), **characterized in that** at least one of a main crossbar (2) and an auxiliary crossbar (3) has corresponding longitudinal ends each defining a corresponding concave profile substantially complementary to and adapted to mate a portion of said circumferential arc segment (TS) of the outer surface of at least one of said main posts (1).

2. A system according to claim 1, **characterized in that** rapid coupling means are provided in the form of clamps (10) for fixing two components of the wall to each other, coupling means (10) of an identical type being usable to fix together a main crossbar (2) and a main post (1), an auxiliary crossbar (3) and a main post (1), an auxiliary crossbar (3) and an auxiliary post (3'), an auxiliary post (3') and a main crossbar (2), an auxiliary post (3') and an auxiliary crossbar (3).

3. A system according to claim 1, **characterized in that** the center distance between two adjacent longitudinal grooves (1B) is around 15°.

4. A system according to claim 1, **characterized in that** a main crossbar (2) has a section comprising a hollow upper portion (2A), a hollow lower portion (2B) and a connecting portion (2C) between the upper (2A) and lower (2B) portions.

5. A system according to claim 4, **characterized in that** the upper and lower portions (2A, 2B) each have, on a part opposite that where the connecting portion (2C) originates, an altogether curved surface (2A', 2B') in which one or more longitudinal grooves (S1, S2, S3) are defined.

6. A system according to claim 1, **characterized in that** at least one of an auxiliary crossbar (3) and an auxiliary post (3') has an outer form of predominantly elliptic section comprising two opposing curved surfaces (3A, 3B) between which a central hollow core (3C) is present, one or more corresponding longitudinal grooves (S1, S2, S3) being defined in said two opposing curved surfaces (3B, 3C).

7. A system according to claim 1, **characterized in that** the hollow upper portion (2A) and the hollow lower portion (2B) of a main crossbar (2) are substantially mirror-inverted with respect to each other and of predominantly elliptic section substantially similar to that of an auxiliary crossbar (3) and an auxiliary post (3').

8. A system according to claim 2, **characterized in that** the clamp (10) is capable of being contained almost completely
- within the overall dimensions of a corresponding main crossbar (2), inside the cavity of the corresponding upper (2A) or lower (2B) portion,
- within the overall dimensions of a corresponding auxiliary crossbar (3) or auxiliary post (3'), inside the cavity of the corresponding central core (3C).

9. A system according to claim 2, **characterized in that** the clamp (10) comprises two jaws (10A) defining corresponding end teeth (10E) capable of being inserted in two longitudinal grooves (1B) of a main post (1) and closing on two corresponding radial ribs (1A) thereof, the clamp further comprising regulation means (10G) for the clamping force of the end teeth (10E) on the corresponding radial ribs (1A) of the main post (1).

10. A system according to claim 9, **characterized in that** the end teeth (10E) are capable of being inserted also in two longitudinal grooves (S1, S3) of an auxiliary post (3') or an auxiliary crossbar (3) or a main crossbar (2).

11. A system according to claim 9, **characterized in that** the two jaws (10A) are hinged to an identical intermediate support element (10B) defining at least one front tooth (10C) capable of being inserted in a corresponding longitudinal groove (1B) of a main post (1) extending between the two grooves (1B) in which the end teeth (10E) of the two jaws (10A, 20A) are inserted.

12. A system according to claim 11, **characterized in that** the front tooth (10C) is capable of being inserted in a corresponding longitudinal groove (S2) extending between the two longitudinal grooves (S1, S3) of an auxiliary post (3') or an auxiliary crossbar (3) or a main crossbar (2) in which the end teeth (10E) of the two jaws (10A, 20A) are inserted.

13. A system according to claim 11, **characterized in that** locking means (10D) are provided for keeping the clamp (10) in position inside the cavity of the upper (2A) and / or lower (2B) portion of a main crossbar (2) or the cavity of the central core (3C) of an auxiliary crossbar (3) or an auxiliary post (3'), said locking means (10D) further hinging the two jaws (10A) to the intermediate support element (10B).

14. A system according to claim 9, **characterized in that** a main crossbar (2), an auxiliary crossbar (3) and an auxiliary post (3') have corresponding side passages (F2, F4) for access to the regulation means (10G, 20E).

15. A system according to claim 13, **characterized in that** a main crossbar (2), an auxiliary crossbar (3) and an auxiliary post (3') have corresponding side passages (F1, F3) for positioning the locking means (10D).

16. A system according to claim 1, **characterized in that** a device (30) is provided for locking a main post (1) between two opposite surfaces (PL, SL) of the room where said post is placed, such as a floor (PL) and a ceiling (SL), said device (30) being operatively disposed between one end of the main post (1) and one of said opposed surfaces (PL, SL) and comprising a part in static position (31) associated with the main post (1), a part (34) that is mobile with respect to the static part (31), and regulation means (32, 33) for varying the position between the mobile part (34) and the static part (31) in the axial direction of the post.

17. A system according to claim 16, **characterized in that**
- the static part of the locking device (30) comprises a support body (31) capable of being inserted in a cavity of the corresponding main post (1), the support body (31) having a corresponding stop surface (31 C) on the main post (1) adapted to limit the insertion of the former in the latter;
- the mobile part of the locking device (30) comprises a sliding body (34) having a first portion (34A) inserted in the support body (31) and a second portion protruding both from the support body (31) and from the main post (1), the second portion having originating thereon one or more engagement elements (34C) capable of being inserted in corresponding longitudinal grooves (1B) of the main post (1);
- the regulation means of the locking device (30) comprise a pin (32) supported by the support body (31) and having a threaded portion (32A) screwed in a corresponding threaded seat (34D) of the sliding body (34), and a driving gear (33) for setting the pin (32) rotating and thereby causing the screwing or unscrewing of the threaded portion (32A) in the corresponding threaded seat (34D) and producing an upward or downward linear motion of the sliding body (34) with respect to the support body (31).

18. A system according to claim 17, **characterized in that** the driving gear (33) is actuated by a tool (T) inserted at least partly in side holes of the main post (1) and the support body (31).

19. A system according to claim 1, **characterized in that** the filling modules (C, V) comprise at least one panel element (C) coupled elastically between at least two components selected among a main crossbar (2), a main post (1), an auxiliary crossbar (3), an auxiliary post (3').

20. A system according to claim 1, **characterized in that** the filling modules (C, V) comprise at least one transparent element (V) kept in position by pairs of locking elements (40), each pair being coupled to at least two components selected among a main crossbar (2), a main post (1), an auxiliary crossbar (3), an auxiliary post (3').

21. A system according to claim 1, **characterized in that** at least one closing section (6) is provided for completing the wall at its upper or lower end as far as contact with the floor (PL) or ceiling (SL) of the room in which the wall is mounted.

22. A system according to claim 21, **characterized in that** the closing section (6) has a portion (6B) in which housing seats (6C) are defined for adjustable presser members (8) acting to press the closing section (6) toward the floor (PL) or ceiling (SL).

23. A system according to claim 1, **characterized in that** an auxiliary post (3') is fixed at one end to a main crossbar (2) and bears at the other end an adjustable foot (50) for support on the floor (PL) of the room in which the wall is mounted.

24. A system according to claim 21, **characterized in that** the auxiliary post (3') is fixed at one end to the main crossbar (2) and bears at the other end an adjustable presser member (9) cooperating with a corresponding closing section (6), the adjustable presser member (9) acting to press the closing section (6) toward the floor (PL).

## Patentansprüche

1. Ein System zur Realisierung mobiler Trennwände, speziell für Büros, welche Pfosten (1, 3'), Traversen (2, 3) und eine selbsttragende lichte Weite (1, 2) aufweisen, speziell ohne feste Verbundmittel mit einem entsprechenden Raum, wobei die selbsttragende lichte Weite (1, 2) aus einer oberen Haupttraverse (2) gebildet wird, welche zwischen ersten und zweiten Hauptposten (1) befestigt wird, wobei die selbsttragende lichte Weite (1, 2) an ihr befestigt einen oder mehrere Hilfspfosten (3') und /oder Traversen (3) aufweist, um Füllmodule (C, V) für die Wand zu stützen, wobei jeder Hauptpfosten (1) eine äußere Oberfläche aufweist, die wenigstens ein umfängliches Bogensegment (T, S) besitzt, welches eine Vielzahl von radialen Rippen (1A) vorgibt, wobei die radialen Rippen (1A) sich entlang dem Hauptpfosten (1) erstrecken, um eine Vielzahl von longitudinalen Fugen (1B) zu bilden, **dadurch gekennzeichnet, dass** wenigstens eines von einer Haupttraverse (2) und einer Hilfstraverse (3) entsprechende longitudinalen Enden aufweist, von denen jedes ein entsprechendes konkaves Profil vorgibt, das im Wesentlichen komplementär ist und angepasst ist, mit einem Teil des umfänglichen Bogensegmentes (T, S) von der äußeren Oberfläche von wenigstens einem der Hauptpfosten (1) zusammenzupassen.

2. Ein System nach Anspruch 1, **dadurch gekennzeichnet, dass** rasche Kopplungsmittel in der Gestalt von Klemmen (10) bereitgestellt werden zur Befestigung von zwei Bauteilen der Wand aneinander, wobei Kopplungsmittel (10) von identischer Art verwendet werden können, um aneinander zu befestigen, eine Haupttraverse (2) und einen Hauptpfosten (1), eine Hilfstraverse (3) und einen Hauptpfosten (1), eine Hilfstraverse (3) und einen Hilfspfosten (3'), einen Hilfspfosten (3') und eine Haupttraverse (2), einen Hilfspfosten (3') und eine Hilfstraverse (3).

3. Ein System nach Anspruch 1, **dadurch gekennzeichnet, dass** der Mittenabstand von zwischen zwei benachbarten longitudinalen Fugen (1B) ungefähr 15° beträgt.

4. Ein System nach Anspruch 1, **dadurch gekennzeichnet, dass** eine Haupttraverse (2) einen Abschnitt aufweist, der einen hohlen oberen Teil (2A) aufweist, einen hohlen unteren Teil (2B) und einen Verbindungsteil (2C) zwischen den oberen (2A) und unteren (2B) Teilen.

5. Ein System gemäß Anspruch 4, **dadurch gekennzeichnet, dass** die oberen und unteren Teile (2A, 2B) jeweils an einem Teil gegenüber jenem, an dem der Verbindungsteil (2C) entspringt, eine insgesamt gekrümmte Oberfläche (2A', 2B') aufweisen, in welcher eine oder mehrere longitudinale Fugen (S1, S2, S3) vorgegeben sind.

6. Ein System nach Anspruch 1 **dadurch gekennzeichnet, dass** wenigstens eines von einer Hilfstraverse (3) und einem Hilfspfosten (3') eine äußere Form von vorwiegend elliptischem Querschnitt aufweist, die zwei gegenüberliegende gekrümmte Oberflächen (3A, 3B) enthält, zwischen denen ein mittiger hohler Kern (3C) vorliegt, wobei eine oder mehrere entsprechende longitudinale Fugen (S 1, S2, S3) in den zwei gegenüberliegenden gekrümmten Oberflächen (3B, 3C) vorgegeben sind.

7. Ein System nach Anspruch 1, **dadurch gekennzeichnet, dass** der hohle obere Teil (2A) und der hohle untere Teil (2B) der Haupttraverse (2) im Wesentlichen spiegelbildlich in Bezug aufeinander sind und von hauptsächlich elliptischem Querschnitt im Wesentlichen ähnlich zu dem einer Hilfstraverse (3) und eines Hilfspfostens (3').

8. Ein System gemäß Anspruch 2 **dadurch gekennzeichnet, dass** die Klemme (10) in der Lage ist, fast vollständig aufgenommen zu werden
- innerhalb der Gesamtabmessungen einer entsprechenden Haupttraverse (2), innerhalb des Hohlraums des entsprechenden oberen (2A) oder unteren (2B) Teils,
- innerhalb der Gesamtabmessungen einer entsprechenden Hilfstraverse (3) oder eines entsprechenden Hilfspfostens (3'), innerhalb des Hohlraums des entsprechenden mittleren Kerns (3C).

9. Ein System gemäß Anspruch 2, **dadurch gekennzeichnet, dass** die Klemme (10) zwei Klemmbacken (10A) aufweist, welche entsprechende Endzähne (10E) vorgeben, welche in der Lage sind, in zwei longitudinale Fugen (1B) eines Hauptpfostens (1) eingefügt zu werden und mit zwei entsprechenden radialen Rippen (1A) davon zu verriegeln, wobei die Klemme ferner Regulierungsmittel (10G) für die Klemmkraft der Endzähne (10E) auf den entsprechenden radialen Rippen (1A) des Hauptpfostens (1) aufweist.

10. Ein System gemäß Anspruch 9, **dadurch gekennzeichnet, dass** die Endzähne (10E) in der Lage sind, ebenso in zwei longitudinale Fugen (S1, S3) eines Hilfspfostens (3') oder einer Hilfstraverse (3) oder einer Haupttraverse (2) eingefügt zu werden.

11. Ein System gemäß Anspruch 9, **dadurch gekennzeichnet, dass** die zwei Klemmbacken (10A) an einem identischen zwischenliegenden Stützelement (10B) angelenkt werden, welches wenigstens einen Vorderzahn (10C) vorgibt, der in der Lage ist, in eine entsprechende longitudinale Fuge (1B) eines Hauptpfostens (1) eingefügt zu werden, wobei er sich zwischen den zwei Fugen (1B) erstreckt, in welche die Endzähne (10E) der zwei Klemmbacken (10A, 20A) eingefügt werden.

12. Ein System nach Anspruch 11, **dadurch gekennzeichnet, dass** der Vorderzahn (10C) in der Lage ist, in eine entsprechende longitudinale Fuge (S2) eingefügt zu werden, das sich zwischen zwei longitudinalen Fugen (S1, S3) eines Hilfspfostens (3') erstreckt oder einer Hilfstraverse (3) oder einer Haupttraverse (2), in welche die Endzähne (10E) der zwei Klemmbacken (10A, 20A) eingefügt werden.

13. Ein System gemäß Anspruch 11, **dadurch gekennzeichnet, dass** Verriegelungsmittel (10D) bereitgestellt werden, um die Klemme (10) in Position innerhalb des Hohlraums zu halten, des oberen (2A) und /oder unteren (2B) Teils der Haupttraverse (2) oder des Hohlraums des mittleren Kerns (3C) einer Hilfstraverse (3) oder eines Hilfspfostens (3'), wobei das Verriegelungsmittel (10D) ferner die zwei Klemmbacken (10A) an dem zwischenliegenden Stützelement (10B) anlenkt.

14. Ein System gemäß Anspruch 9, **dadurch gekennzeichnet, dass** eine Haupttraverse (2), eine Hilfstraverse (3) und ein Hilfspfosten (3') entsprechende Seitenpassagen (F2, F4) aufweisen, um auf die Regulierungsmittel (10G, 20E) zuzugreifen.

15. Ein System nach Anspruch 13, **dadurch gekennzeichnet, dass** eine Haupttraverse (2), eine Hilfstraverse (3) und ein Hilfspfosten (3') entsprechende Seitenpassagen (F1, F3) aufweisen, um die Verriegelungsmittel (10D) zu positionieren.

16. Ein System nach Anspruch 1, **dadurch gekennzeichnet, dass** eine Vorrichtung (30) zur Verriegelung eines Hauptpfostens (1) zwischen zwei gegenüberliegenden Oberflächen (PL, SL) eines Raums bereitgestellt werden, in dem der Pfosten platziert wird, wie beispielsweise einem Boden (PL) und einer Decke (SL), wobei die Vorrichtung (30) betreibbar angeordnet ist zwischen einem Ende des Hauptpfostens (1) und einer der gegenüberliegenden Oberflächen (PL, SL) und einen Teil in statischer Position (31) aufweist, der dem Hauptpfosten (1) zugeordnet ist, einen Teil (34), der beweglich ist in Bezug auf den statischen Teil (31), und Regulierungsmittel (32, 33) zur Veränderung der Position zwischen dem beweglichen Teil (34) und dem statischen Teil (31) in der axialen Richtung des Pfostens.

17. Ein System gemäß Anspruch 16, **dadurch gekennzeichnet, dass**
- der statische Teil der Verriegelungsvorrichtung (30) einen Stützkörper (31) aufweist, der in der Lage ist, in einen Hohlraum des entsprechenden Hauptpfostens (1) eingefügt zu werden, wobei der Stützkörper (31) eine entsprechende obere Oberfläche (31 C) auf dem Hauptpfosten (1) aufweist, die daran angepasst ist, die Einfügung des vorhergehenden in den letzteren zu begrenzen;
- der mobile Teil der Verriegelungsvorrichtung (30) einen verschiebbaren Körper (34) aufweist, welcher einen ersten Teil (34A) aufweist, der in den Stützkörper (31) eingefügt ist und einen zweiten Teil, der vom Stützkörper (31) vorspringt und vom Hauptpfosten (1), wobei der zweite Teil daraus hervorgehend eines oder mehrere Erfassungselemente (34C) aufweist, die in der Lage sind, in entsprechende longitudinale Fugen (1B) des Hauptpfostens (1) eingefügt zu werden;
- die Regulierungsmittel der Verriegelungsvorrichtung (30) einen Stift (32) aufweisen, der durch den Stützkörper (31) gestützt wird und einen mit Gewinde versehenen Teil (32A) aufweist, der in einen entsprechenden Gewindesitz (34D) des verschiebbaren Körpers (34) geschraubt ist, und ein Antriebszahnrad (33), um den Stift (32) in Rotation zu versetzen und **dadurch** das Anschrauben oder Abschrauben des mit Gewinde versehenen Teils (32A) in den entsprechenden Gewindesitz (34D) zu bewirken und eine lineare Aufwärts- oder Abwärtsbewegung des verschiebbaren Körpers (34) in Bezug auf den Stützkörper (31) zu erzeugen.

18. Ein System gemäß Anspruch 17, **dadurch gekennzeichnet, dass** das Antriebszahnrad (33) durch ein Werkzeug (T) betätigt wird, dass wenigstens zum Teil in Seitenlöcher des Hauptpfostens (1) und des Stützkörpers (31) eingefügt wird.

19. Ein System gemäß Anspruch 1 **dadurch gekennzeichnet, dass** die Füllmodule (C, V) wenigstens ein Paneelelement (C) aufweisen, das elastisch zwischen wenigstens zwei Bauteile eingekoppelt ist, die aus der Haupttraverse (2), einem Hauptpfosten (1), einer Hilfstraverse (3), einem Hilfspfosten (3') gewählt werden.

20. Ein System gemäß Anspruch 1, **dadurch gekennzeichnet, dass** die Füllmodule (C, V) wenigstens ein transparentes Bauteil (V) aufweisen, das durch Paare von Verriegelungselementen (40) in Position gehalten wird, wobei jedes Paar mit wenigstens zwei Bauteilen gekoppelt ist, die aus einer Haupttraverse (2), einem Hauptpfosten (1), einer Hilfstraverse (3), einem Hilfspfosten (3') gewählt werden.

21. Ein System nach Anspruch 1, **dadurch gekennzeichnet, dass** wenigstens ein Verschlussabschnitt (6) zum Abschluss der Wand an ihrem oberen oder unteren Ende bereitgestellt wird, so weit bis zum Kontakt mit dem Boden (PL) oder der Decke (SL) des Raums, in welchem die Wand montiert ist.

22. Ein System nach Anspruch 21, **dadurch gekennzeichnet, dass** der Abschlussabschnitt (6) einen Teil (6B) aufweist, in welchem Aufnahmesitze (6C) vorgegeben sind für justierbare Druckbauteile (8), die arbeiten, um den Abschlussabschnitt (6) in Richtung des Bodens (PL) oder der Decke (SL) zu drücken.

23. Ein System gemäß Anspruch 1, **dadurch gekennzeichnet, dass** ein Hilfspfosten (3') an einem Ende an einer Haupttraverse (2) befestigt ist und an dem anderen Ende einen justierbaren Fuß (50) zum Stützen auf dem Boden (PL) des Raumes trägt, in welchem die Wand montiert ist.

24. Ein System gemäß Anspruch 21, **dadurch gekennzeichnet, dass** der Hilfspfosten (3') an einem Ende an der Haupttraverse (2) befestigt ist und an dem anderen Ende ein justierbares Druckbauteil (9) trägt, das mit einem entsprechenden Abschlussabschnitt (6) zusammenarbeitet, wobei das justierbare Druckbauteil (9) arbeitet, um den Abschlussabschnitt (6) in Richtung des Bodens (PL) zu drücken.

## Revendications

1. Système permettant de réaliser des cloisons mobiles, destinées particulièrement à des bureaux, comportant des montants (1, 3'), des barres de traverse (2, 3) et un cadre autoporteur (1, 2), particulièrement sans moyens de jonction fixes à une pièce correspondante, le cadre autoporteur (1, 2) étant constitué d'une barre de traverse principale ou supérieure (2) fixée entre des premier et second montants principaux (1), le cadre autoporteur (1, 2) présentant, fixés sur lui un ou plusieurs montant(s) auxiliaire(s) (3') et/ou barres de traverse auxiliaires (3) pour supporter des modules de remplissage (C, V) destinés à la paroi, chaque montant principal (1) présentant une surface extérieure comportant au moins un segment d'arc de circonférence (TS) définissant une pluralité de nervures radiales (1A), les nervures radiales (1A) s'étendant le long du montant principal (1) pour former une pluralité de gorges longitudinales (1B), **caractérisé en ce qu'**au moins l'une d'une barre de traverse principale (2) et d'une barre de traverse auxiliaire (3) possède des extrémités longitudinales correspondantes définissant chacune un profil concave correspondant essentiellement complémentaire, et adapté, pour s'adapter à une partie dudit segment d'arc circonférentiel (TS) de la surface extérieure d'au moins l'un desdits montants (1).

2. Système selon la revendication 1, **caractérisé en ce que** des moyens de couplage rapide sont prévus sous la forme de pinces de blocage (10) pour fixer deux composants de la cloison l'un à l'autre, des moyens de couplage (10) d'un type identique étant utilisables pour fixer ensemble une barre de traverse principale (2) et un montant principal (1), une barre de traverse auxiliaire (3) et un montant principal (1), une barre de traverse auxiliaire (3) et un montant auxiliaire (3'), un montant auxiliaire (3') et une barre de traverse principale (2), un montant auxiliaire (3') et une barre de traverse auxiliaire (3).

3. Système selon la revendication 1 **caractérisé en ce que** la distance d'axe en axe entre deux gorges longitudinales adjacentes (1B) est de 15° environ.

4. Système selon la revendication 1, **caractérisé en ce qu'**une barre de traverse principale (2) présente une section comportant une partie supérieure creuse (2A), une partie inférieure creuse (2B) et une partie de connexion (2C) comprise entre les parties supérieure (2A) et inférieure (2B).

5. Système selon la revendication 4, **caractérisé en ce que** les parties supérieure et inférieure (2A, 2B) comportent, chacune, sur une partie opposée à celle d'où provient la partie de connexion (2C), une surface entièrement courbe (2A', 2B') dans laquelle une ou plusieurs gorge(s) longitudinale(s) (S1, S2, S3) sont définies.

6. Système selon la revendication 1, **caractérisé en ce qu'**au moins l'un d'une barre de traverse auxiliaire (3) et d'un montant auxiliaire (3') présente une forme extérieure de section elliptique de façon prédominante comportant deux surfaces courbes opposées (3A, 3B) entre lesquelles se trouve lesquelles une partie centrale creuse (3C), une ou plusieurs gorge(s) longitudinale(s) correspondante (s) (S1, S2, S3) étant définie(s) dans les deux dites surfaces courbes opposées (3B, 3C).

7. Système selon la revendication 1, **caractérisé en ce que** la partie supérieure creuse (2A) et la partie inférieure creuse (2B) d'une barre de traverse principale (2) sont essentiellement inversées symétriquement l'une par rapport à l'autre et de section elliptique de façon prédominante essentiellement similaire à celle d'une barre de traverse auxiliaire (3) et d'un montant auxiliaire (3').

8. Système selon la revendication 2, **caractérisé en ce que** la pince de blocage (10) est capable d'être contenue presque entièrement
- à l'intérieur des dimensions globales d'une barre de traverse principale correspondante (2), à l'intérieur de la cavité de la partie supérieure (2A) ou inférieure (2B) correspondante ;
- à l'intérieur des dimensions globales d'une barre de traverse auxiliaire correspondante (3) ou d'un montant auxiliaire (3'), à l'intérieur de la cavité de la partie centrale correspondante (3C).

9. Système selon la revendication 2, **caractérisé en ce que** la pince à bloquer (10) comporte deux mâchoires (10A) définissant des dents d'extrémité correspondantes (10E) capables d'être insérées dans deux gorges longitudinales (1B) d'un montant principal (1) et de se refermer sur deux de ses nervures radiales correspondantes (1A), la pince comportant, de plus, des moyens de réglage (10G) permettant de régler la force de blocage des dents d'extrémité (10E) sur les nervures radiales correspondantes (1A) du montant principal (1).

10. Système selon la revendication 9, **caractérisé en ce que** les dents d'extrémité (10E) sont capables d'être insérées également dans deux gorges longitudinales (S1, S3) d'un montant auxiliaire (3') ou d'une barre de traverse auxiliaire (3) ou d'une barre de traverse principale (2).

11. Système selon la revendication 9, **caractérisé en ce que** les deux mâchoires (10A) sont articulées sur un élément de support intermédiaire identique (10B) définissant au moins une dent avant (10C) capable d'être insérée dans une gorge longitudinale correspondante (1B) d'un montant principal (1) s'étendant entre les deux gorges (1B) dans lesquelles les dents d'extrémité (10E) des deux mâchoires (10A, 20A) sont insérées.

12. Système selon la revendication 11, **caractérisé en ce que** la dent avant (10C) peut être insérée dans une gorge longitudinale correspondante (S2) s'étendant entre les deux gorges longitudinales (S1, S3) d'un montant auxiliaire (3') ou d'une barre de traverse auxiliaire (3) ou d'une barre de traverse principale (2) dans lesquelles les dents d'extrémité (10E) des deux mâchoires (10A, 20A) sont insérées.

13. Système selon la revendication 11, **caractérisé en ce que** des moyens de verrouillage (10D) sont prévus pour maintenir la pince de blocage (10) en place à l'intérieur de la cavité de la partie supérieure (2A) et/ou inférieure (2B) d'une barre de traverse principale (2) ou de la cavité de la partie centrale (3C) d'une barre de traverse auxiliaire (3) ou d'un montant auxiliaire (3'), lesdits moyens de verrouillage (10D) servant à articuler, de plus, les deux mâchoires (10A) sur l'élément de support intermédiaire (10B).

14. Système selon la revendication 9, **caractérisé en ce qu'**une barre de traverse principale (2), une barre de traverse auxiliaire (3) et un montant auxiliaire (3') comportent des passages latéraux correspondants (F2, F4) permettant un accès pour les moyens de réglage (10G, 20E).

15. Système selon la revendication 13, **caractérisé en ce qu'**une barre de traverse principale (2), une barre de traverse auxiliaire (3) et un montant auxiliaire (3') comportent des passages latéraux correspondants (F1, F3) servant à positionner les moyens de verrouillage (10D).

16. Système selon la revendication 1, **caractérisé en ce qu'**un dispositif (30) est prévu pour verrouiller un montant principal (1) entre deux surfaces opposées (PL, SL) de la pièce dans laquelle ledit monté est placé, telles qu'un plancher (PL) et un plafond (SL), ledit dispositif (30) étant disposé fonctionnellement entre une extrémité du montant principal (1) et l'une desdites surfaces opposées (PL, SL), et comportant une partie en position statique (31) associée au montant principal (1), une partie (34) qui est mobile par rapport à la partie statique (31), et des moyens de réglage (32, 33) servant à modifier la position entre la partie mobile (34) et la partie statique (31) dans la direction axiale du montant.

17. Système selon la revendication 16, **caractérisé en ce que** :
- la partie statique du dispositif de verrouillage (30) comporte un corps de support (31) pouvant être inséré dans une cavité du montant principal correspondant (1), le corps de support (31) présentant une surface de butée correspondante (31C) sur le montant principal (1) adaptée pour limiter l'insertion du corps dans le montant;
- la partie mobile du dispositif de verrouillage (30) comporte un corps de coulissement (34) ayant une première partie (34A) insérée dans le corps de support (31) et une seconde partie faisant saillie à la fois à partir du corps de support (31) et du montant principal (1), la seconde partie présentant, à partir d'elle, un ou plusieurs élément(s) d'engagement (34C) pouvant être insérés dans les gorges longitudinales correspondantes (1B) du montant principal (1),
- les moyens de réglage du dispositif de verrouillage (30) comportent une broche (32) supportée par le corps de support (31) et présentant une partie filetée (32A) vissée dans une embase taraudée correspondante (34D) du corps de coulissement (34), et un mécanisme de commande à engrenage (33) pour mettre la broche (32) en rotation et entraîner, de ce fait, le vissage ou le dévissage de la partie filetée (32A) dans l'embase taraudée correspondante (34D) et produire un déplacement linéaire vers le haut ou vers le bas du corps de coulissement (34) par rapport au corps de support (31).

18. Système selon la revendication 17, **caractérisé en ce que** le mécanisme de commande à engrenage (33) est actionné par un outil (T) inséré au moins partiellement dans des trous latéraux du montant principal (1) et du corps de support (31).

19. Système selon la revendication 1, **caractérisé en ce que** les modules de remplissage (C, V) comprennent, au moins, un élément de panneau (C) couplé élastiquement entre au moins deux composants sélectionnés parmi une barre de traverse principale (2), un montant principal (1), une barre de traverse auxiliaire (3), un montant auxiliaire (3').

20. Système selon la revendication 1, **caractérisé en ce que** les modules de remplissage (C, V) comprennent, au moins, un élément transparent (V) maintenu en place par des paires d'éléments de verrouillage (40), chaque paire étant couplée à au moins deux composants sélectionnés parmi une barre de traverse principale (2), un montant principal (1), une barre de traverse auxiliaire (3), un montant auxiliaire (3').

21. Système selon la revendication 1, **caractérisé en ce qu'**au moins une section de fermeture (6) est prévue pour achever la cloison au niveau de son extrémité supérieure ou inférieure dans la mesure du contact avec le plancher (PL) ou le plafond (SL) de la pièce dans laquelle la cloison est montée.

22. Système selon la revendication 21, **caractérisé en ce que** la section de fermeture (6) comporte une partie (6B) dans laquelle des embases de réception (6C) sont définies pour des éléments de compression réglables (8) agissant pour presser la section de fermeture (6) vers le plancher (PL) ou le plafond (SL).

23. Système selon la revendication 1, **caractérisé en ce qu'**un montant auxiliaire (3') est fixé à une extrémité d'une barre de traverse principale (2) et supporte au niveau de l'autre extrémité un pied réglable (50) servant de support sur le plancher (PL) de la pièce dans laquelle la cloison est montée.

24. Système selon la revendication 21, **caractérisé en ce que** le montant auxiliaire (3') est fixé au niveau d'une extrémité à la barre de traverse principale (2) et supporte au niveau de l'autre extrémité un élément de compression réglable (9) coopérant avec une section de fermeture correspondante (6), l'élément de compression réglable (9) agissant pour presser la section de fermeture (6) vers le plancher (PL).
